(19) Europäisches Patentamt

European Patent Office

Office européen des brevets

(11) Publication number: **0 131 342 B1**

## EUROPEAN PATENT SPECIFICATION

(45) Date of publication of patent specification: **24.04.91**　(51) Int. Cl.⁵: **G03B 19/00**, G02F 1/19

(21) Application number: **84200998.7**

(22) Date of filing: **10.07.84**

(54) Electrophoretic camera.

(30) Priority: **11.07.83 US 512517**

(43) Date of publication of application:
**16.01.85 Bulletin 85/03**

(45) Publication of the grant of the patent:
**24.04.91 Bulletin 91/17**

(84) Designated Contracting States:
**DE FR GB NL**

(56) References cited:
**DE-A- 2 216 766**
**DE-A- 2 442 257**
**FR-A- 2 046 348**

(73) Proprietor: **N.V. Philips' Gloeilampenfabrieken**
**Groenewoudseweg 1**
**NL-5621 BA Eindhoven(NL)**

(72) Inventor: **Pinker, Ronald David**
**c/o INT. OCTROOIBUREAU B.V. Prof. Holst-**
**laan 6**
**NL-5656 AA Eindhoven(NL)**

(74) Representative: **Scheele, Edial François et al**
**INTERNATIONAAL OCTROOIBUREAU B.V.**
**Prof. Holstlaan 6**
**NL-5656 AA Eindhoven(NL)**

Rank Xerox (UK) Business Services

## Description

The invention relates to a camera having an optical system for providing a hard copy of the image.

Electrophoretic imaging displays involve an electrophoretic suspension sandwiched between two transparent electrodes, such as may be seen in US Patent 4,203,106 and the article by Murau et al in IEEE Trans. Elect. Devices, Vol. ED-26, No. 8, August 1979. This suspension is comprised of charged pigment particles of one color suspended in a contracting color, dyed solvent. Under an electric field, positive particles will migrate to a negative electrode or negative particles will migrate to a positive electrode. An image is then formed of contrasting colored pigment particles against a dyed background. Such an electrophoretic device including a light sensitive photoconducting layer is further known from DE-A-2,442,257.

There have existed various techniques of addressing this suspension to form an image as may be seen in the above-mentioned reference. In this respect, patterned indium oxide electrodes provide a numeric read-out, while a patterned grid structure provides an alpha-numeric display. In addition, photoconductors sensitive to X-rays have been used in contact with this suspension for X-ray imaging.

A light-sensitive photoconductor is also used in the present invention in contact with the electrophoretic suspension so that a light image is obtained by projecting a light image onto the photoconductor. In principle such light images can be provided by various techniques including a slide projector focussing an image onto the photoconductor, a transparency focussed onto the photoconductor, a laser for writing images onto the photoconductor, and video systems for recording images from a CRT monitor. As a result such displays can in principle be used for recording text, previewing slide film negatives, and constucting temporary security badges, for example. Such displays can be easily portable, and have memories lasting at least from a few days to several weeks.

In DE-A 2,216,766, a camera is described which uses an image-converting liquid crystal cell in its viewfinder. It is an object of the invention to provide a camera in which an image of the proposed picture can be formed without wasting film and a hard copy can be obtained.

To this end, the camera according to the invention is characterized in that it comprises an electrophoretic display interchangeable with the film, said electrophoretic display including a first substrate, a first electrode disposed on the first substrate, a light-sensitive photoconductor disposed on the first electrode, a second electrode spaced from the photoconductor, an electrophoretic suspension disposed in the space between the photoconductor and the second electrode, and a second substrate disposed on the second electrode.

An important result of the construction according to the present invention is that light images having good resolution (such as about 4 line pairs/mm or 1p/mm) and good gray scale can be provided. In this respect, the invention seeks to improve to as many as 20 gray scales, and at least in the range of 10-20 gray scales. Exposure times can be relatively short, such as 10 to 40 ms, with a light source of about 11-22 $1mm^{-2}$. Images of people and places are easily discernable in such a structure, and the images can be stored or erased so that the device can be used again.

The structure and arrangement of the presently claimed invention may be seen more clearly by reference to the drawing Figures, wherein:

Figure 1 illustrates in cross-section a light addressable electrophoretic display;

Figure 2 illustrates an example of an electrophoretic display according to the present invention in a camera.

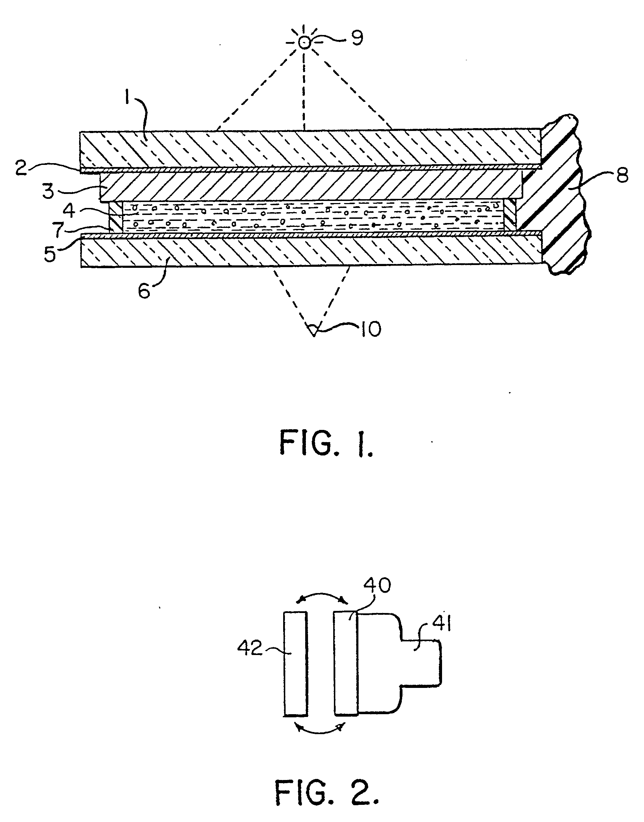

In Figure 1 a first substrate 1 is provided with a conductive layer 2, such as indium oxide. A photoconductor 3 is provided on the conductive layer 2, and this structure of substrate 1, electrode 2, and photoconductor 3 is spaced from another conductive surface 5 mounted on a second substrate 6. The spacing is provided by a spacer 7 and an electrophoretic suspension 4 is provided in the space. Epoxy 8 binds the various layers together.

In such an arrangement, cadmium sulfide has been found to be a useful light addressable photoconductor. Cadmium sulfide provides very good images in a light addressable photoconductor. Lead oxide is also a light sensitive photoconductor that is used although it is not as sensitive as CdS. In addition, selenium provides a good light-sensitive photoconductor which also can be used in the structures of the present invention.

The principle criteria in selecting the light sensitive photoconductor is that it be inert in contact with the suspension medium. This rules out organic photoconductors.

A CdS-type photoconductor, for example, is mixed with an epoxy binder and applied to the substrate 1 and conductive layer 2. Such application can be by coating or spraying. It has been found that CdS photoconductive layers to approximately 50-100 $\mu$m thickness is quite adequate. In all cases the light sensitive photoconductor has an area covering 7.62 by 7.62 cm to as large as 35.56 by 43.18 cm

As a further example of the photoconductor 3, a polycrystalline binder layer of tetragonal lead oxide has been used. Such a material is settled from a slurry onto the substrate 1 and conductive layer 2 to give a uniform layer approximately 90 μm thick. In such an example, the substrate 1 and conductive layer 2 can be glass coated with indium oxide.

A mylar spacer 7 is used to provide a gap of 100 μm between the photoconductor layer 3 and the conductive layer 5 and substrate 6. The device is sealed with epoxy 8, and after curing the epoxy, the electrophoretic suspension 4 is introduced into the device through predrilled holes in the structure 5, 6. The electrode 5 may also be indium oxide while the substrate 6 is a viewing substrate such as glass. In this structure an observer 10 can view the suspension 4 by way of the light 9 shining through the device.

The electrophoretic suspension 4 involves four basic ingredients, i.e. pigments, solvent, stabilizer, and dye. It has been found that the nature of this suspension is complex due to interaction of the various components. Consequently, any variation in one component will effect the function of the other materials.

To briefly explain each component, it may be noted that the pigment acts to reflect incident light back to the viewer. Consequently, a pigment having a bright color with a high refractive index is required. Moreover, the pigment should he inert in the system and capable of being charged. Therefore, a low specific gravity organic pigment, such as diarylide yellow is employed. Diarylide yellow is satisfactory in meeting all the above requirements for a pigment without any alterations.

A further aspect of the suspension is that the solvent acts as a suspending medium for the pigment. A solvent is chosen whose density is the same as the pigment in order to avoid settling of the pigment. Mixtures of solvents, such as tetrachloroethylene, xylene, can also be used in order to achieve density matching. A suitable solvent would have a low refractive index, a low viscosity, and a high resistivity.

The dye utilized in the suspension provides the dark back-ground. Thus, it is very important that the dye have a high absorption coefficient. Black and blue are the preferred colors. On the other hand, the dye should have a low conductivity so as not to interact with the pigment by way of absorption, as well as to be soluble in the solvent. The Sudan family of dyes are among those that can be effecttively used.

Finally, the suspension requires a stabilizer. An example is 06A ≠ 470 by Chevron. There are two types of stabilizers that can be used, namely those providing charging agents, and those providing dispersing agents. Charging agents impart a charge to the pigment particles in order to render it electrophoretically active. Dispersion agents prevent floculation of the particles in suspension such as by adsorption of long polymer chains. Some stabilizers may act as both charging agents and dispersing agents for stabilizing the pigment.

To operate the device, an erasure A.C. square-wave field is applied of about 400 volts. This electric field causes switching of the pigment particles between electrodes 2 and 5. Any previous latent images will be erased upon application of such field.

An exposure is then made with the photoconductor electrode 2 being positive by 400 V, for example, so that all of the pigment in the electrophoretic suspension, assuming a negative pigment charge, will be attached to the photoconductor. The electrode 5 at the viewing side will appear black. The light source 9 is pulsed for an appropriate amount of time, such as 20 ms to 100 ms. Immediately after the exposure, the electric field is removed by shorting the electrodes 2 and 5. The pigment particles at areas where the photoconductor was not exposed will then be switched to the viewing electrode, but pigment Particles will remain attached to the photoconductor where the photoconductor was illuminated by the light source 9.

When the photoconductor is biased to be positive, for example, negative pigment particles will be attracted to the photoconductor surface. Upon making an exposure, the illuminated photoconductor undergoes an internal polarization involving the formation and separation of electron-hole pairs. The holes are swept to the photoconductor/ suspension interface.

Following the exposure, the image is developed by removing the voltage and shorting the electrodes. In the unexposed regions where no electron-hole pairs are produced, there exist a long dielectric relaxation time. Therefore, the removal of the external voltage ($_\Delta$V) causes a similar $\Delta$V at the photoconductor surface resulting in a negative potential that repels the pigment to the electrode 5 at the viewing side of the device.

At the exposed regions there is an accumulation of charge. Therefore, a dielectric relaxation time occurs after the voltage is removed. The pigment in these areas will not be subjected to any Potential field, but will remain in contact with the photoconductor due to van der Waals forces of attraction.

This electrophoretic imaging device of Figure 1, for example, will produce a stored image that will remain for at least a few days without any applied voltage. In fact, the stored image will remain almost indefinately if undisturbed. It is portable can be easily operated, and is fast in operation requiring from around 100 mSec. to about 115 mSec. for development.

The electrophoretic is used in conjunction with a camera structure 41, such as illustrated in Figure 2. In this arrangement, the display 40 can be forced as separate element which is substituted in the camera in place of film. A temporary image can be obtained through the camera 41 onto the electrophoretic display. This can be convenient in determining correct f-stop, shutter speed and other characteristics of the camera. Once the correct settings are obtained, for example, a film pack 42 can be exchanged with the electrophoretic display 40 to obtain a hard copy without unnecessary waste of film. The image on the display can be stored for days without any additional voltages applied thereto.

The display 40 and the film pack 42 can be arranged to be removably interchanged or arranged to be changeably moved in permanent mountings in the camera structure 41. This would involve an arrangement for interchanging the display 40 and film pack 42 to be alternately placed in the camera for exposure to an object.

Although a photoconductor is not as sensitive as film, an effective image can be obtained on the display for checking the image of the object before exposure to the film 42. This type of structure makes available the concept of reusable film. For example, such structures can be used in security badges.

## Claims

1. A camera having an optical system for providing an image and a film for forming a hard copy of the image, characterized in that it comprises an electrophoretic display interchangeable with the film, said electrophoretic display including a first substrate, a first electrode disposed on the first substrate, a light-sensitive photoconductor disposed on the first electrode, a second electrode spaced from the photoconductor, an electrophoretic suspension disposed in the space between the photoconductor and the second electrode, and a second substrate disposed on the second electrode.

2. A camera as claimed in Claim 1, wherein the electrophoretic display and the film are permanently mounted.

3. A camera as claimed in Claim 1, wherein the photoconductor is of CdS, Se or PbO.

## Revendications

1. Caméra comportant un système optique pour fournir une image et une pellicule pour former une copie sur support en papier de l'image, caractérisée en ce qu'elle comprend un dispositif d'affichage électrophorétique qui peut être échangé contre la pellicule, ce dispositif d'affichage électrophorétique comportant un premier substrat, une première électrode disposée sur le premier substrat, un photoconducteur photosensible disposé sur la première électrode, une seconde électrode espacée du photoconducteur, une suspension électrophorétique disposée dans l'espace séparant le photoconducteur et la seconde électrode et un second substrat disposé sur la seconde électrode.

2. Caméra suivant la revendication 1, dans laquelle le dispositif d'affichage électrophorétique et la pellicule sont montés en permanence.

3. Caméra suivant la revendication 1, dans laquelle le photoconducteur est en CdS, Se ou PbO.

## Ansprüche

1. Kamera mit einem optischen System zum Versorgen einer Abbildung und mit einem Film zur Bildung eines Ausdrucks der Abbildung, dadurch gekennzeichnet, daß sie mit einer elektrophoretischen, mit dem Film auswechselbaren Anzeige versehen ist, die ein erstes Substrat, eine erste, auf dem ersten Substrat angebrachte Elektrode, einen auf der ersten Elektrode angeordneten lichtempfindlichen Photoleiter, eine zweite im Abstand vom Photoleiter angeordnete Elektrode, eine elektrophoretische, im Raum zwischen dem Photoleiter und der zweiten Elektrode angebrachte Aufhängung und ein zweites auf der zweiten Elektrode angebrachtes Substrat enthält.

2. Kamera nach Anspruch 1, worin die elektrophoretische Anzeige und der Firm dauerhaft montiert sind.

3. Kamera nach Anspruch 1, worin der Photoleiter aus CdS, Se oder PbO zusammengesetzt ist.

FIG. I.

FIG. 2.